# EUROPEAN PATENT APPLICATION

(11) **EP 0 527 709 A2**
(43) Date of publication of application: **17.02.1993**
(21) Application number: 92830414.6
(22) Date of filing: 27.07.1992
(51) Int. Cl.: G06F 15/64

(54) **A system for the management of the memorization and restitution of video signal sequences on digital mass memories**

(30) Priority: 09.08.1991 IT FI910208
(71) Applicant: TOWER TECH S.R.L., I-56127 Pisa (IT)
(72) Inventor: Maccari, Antonio, I-56100 Pisa (IT); Lazzeri, Paolo, I-56017 S.Giuliano Terme (Pisa) (IT)
(74) Representative: Bardini, Marco Luigi

(57) **Abstract**

A system for the management of the memorization and restitution of video signal sequences on digital mass memories comprising: a computer (100) provided with conventional Buses (105, 106, 107); a source/destination (102) of video signals; a digital mass memory (104) associated to a relative controller (103); buffer memory means (112) interconnecting operatively in an asynchronous way the source/destination (102) and the digital memory (104), arranged so that the computer can manage the transfer bidirectional video data transfer between the source/destination (102) and the digital memory (104) without engaging the computer mass memory while maintaining the possibility of intervention on the signals in transit in the buffer memory (112).

## Description

In the application involving a personal computer, it is always more pressing the exigence of handling video sequences. One of the problem connected with such need is bound to the selection of the support whereon these sequences are memorized. There are solutions wherein these video sequences are memorized on analog type supports. For standardizing the peripherals of a computer, in order to avoid the use of a dedicated analog mass memory as a peripheral, in order to reduce the overall costs of the system, it would preferable to use a digital mass memory also for the video sequences. In the hypothesis of memorizing the video sequences in a digital format, the images require a great quantity of memory and the throughput necessary for guaranteeing 25 frames/sec, with a resolution suitable for television, is higher than that can be obtained with the architecture presently available. There exist image compression techniques, with which it is possible to reduce the quantity of the memory necessary for each frame, generally under the trade-off of the quality of the image. Also accepting the high compression factor, however, it is not possible to guarantee the full operativeness of a system managed by a personal computer during accesses to the video sequences.

In the present architecture, the flow of data from (or towards) a peripheral digital mass memory, passes always through the memory of the personal computer system, to be transferred subsequently towards (or from) the utilizer or generator device. The utilizer/generator device of the video signal in this case may be intended as a compressor/de-compressor of video images that cooperates with a conventional video source/destination, such as a telecamera, a videotape recorder, and video monitor.

In this way, during the accesses through the peripheral mass memory, for the recovery or the memorization of video sequences, the operation of the personal computer system is blocked, since the resources of the personal computer system must be entirely directed to the control of the accesses and to the management of the peripheral mass memory and of the utilizer/generator.

Such limitation can not be accepted in multimedia applications, where it is required that the personal computer be able to manage at the same time video signals, audio signals, graphics signals, interactivity with the operator (mouse, cursors, insertion of other graphic signals, etc.).

The present invention provides to utilize between the peripheral mass memory which contains the video sequences and the device utilizing such sequences, in a bidirectional way, a connection arrangement that operates in an automatic way that is also asynchronous with respect to the personal computer system, in order to avoid a deterioration of the performances of such system, and for ensuring the required throughput in the transfer of video sequences.

The solution just mentioned is to be intended as a "complete" solution for the problem of managing digital video sequences. There exist also a "simplified" solution, wherein the handling of the communication protocol with the mass memory peripheral is left to the personal computer system, without putting a burden upon it in respect of the operations relating to the actual memorization of the digital video sequences in the intermediate buffer of the memory of the personal computer system and of the subsequent transfer of such video sequences towards the utilizer. In the simplyfied solution, the data transfer between the peripheral mass memory and the utilizer is only a unidirectional one.

Since the communication is a unidirectional one, this simplified solution may be utilized for system for displaying digital video sequences, but not for their memorization. Even accepting the limitation here mentioned, the simplified solution is still effective and interesting for all those applications which entail the reproduction or play-back of pre-recorded video sequences, such as information points that display advertising sequences, stations for the perusal of operation manuals of apparatus of any kind, information tellers for shops of rent/sale of videocassettes, etc.

In this case it is maintained the possibility by the system of having access to the peripheral mass memory and to the utilizer device for the video sequences, both in connection with the exchange of data, and for the access to their registers.

Moreover, there are provided means for allowing the transfer of data between the peripheral digital mass memory and the utilizer/generator device when these operate with clock generators that are not synchronized each other and that cannot be synchronized each other, particularly when the peripheral digital mass memory is a "hard disk", well known in the art.

In the drawings:
- Figure 1 shows the simplyfied general architecture of the system according to the present invention;
- Figure 2 shows the general block diagram of the system according to the present invention;
- Figure 2A shows a general block diagram of a simplyfied embodiment with respect to the one shown in figure 2;
- Figure 3 shows a modification for the case of interfacing with a computer having an interface that is different from the one of figure 2; and
- Figure 4 shows into detail a part of the circuits schematically shown in Figure 2.

The present invention will be now disclosed with reference to preferred embodiments, referred to as an illustrative and not limiting example. It should be preliminarily noted in particular that some components and subsystem are identified with their commercial identification names as a descriptive simplification, and that other blocks are shown in a relatively general way with reference to their "external" function (black boxes) in that their specific internal structure is not essential for an understanding of the technical teaching of the present invention and because, as it is well-known to a personal skilled in the art their actual internal structure either can be derived from the explicitely identified components, or their architecture depends on design criteria within the grasp of a person skilled in digital system design.

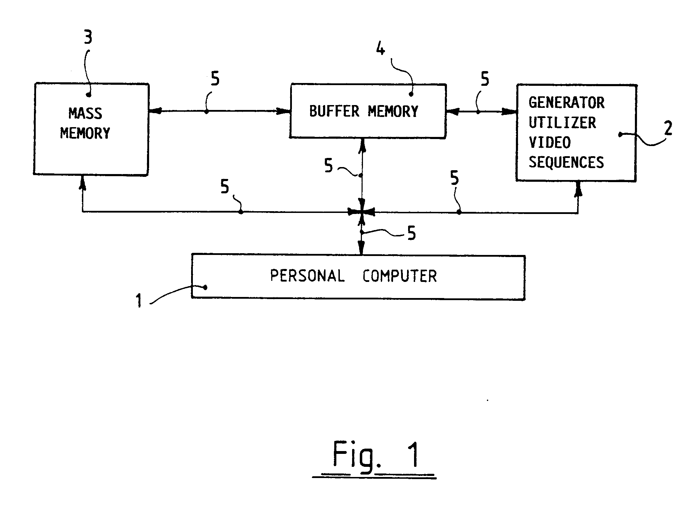

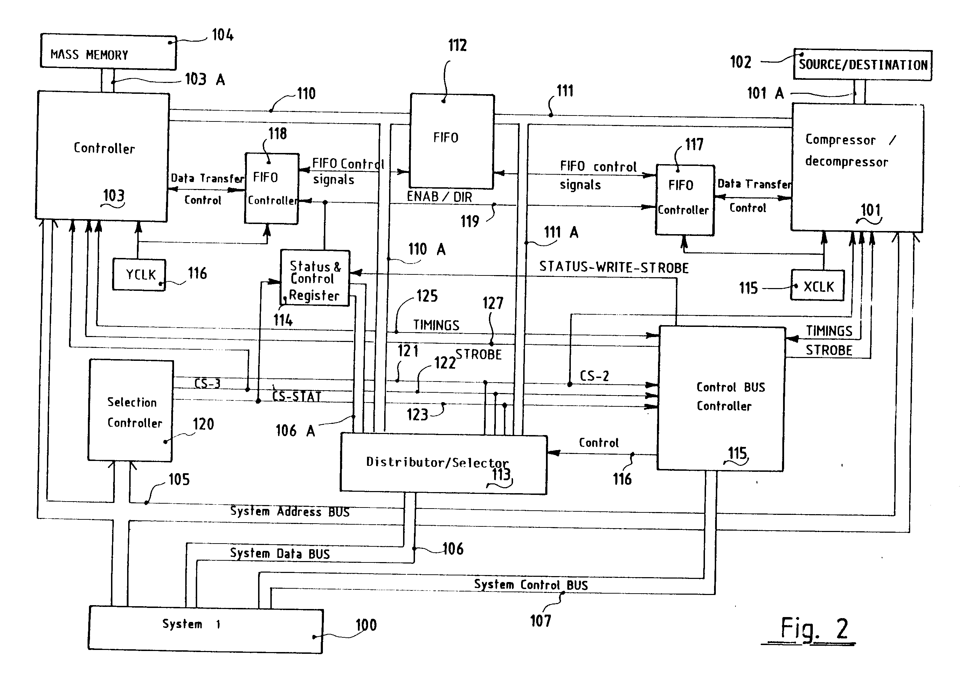

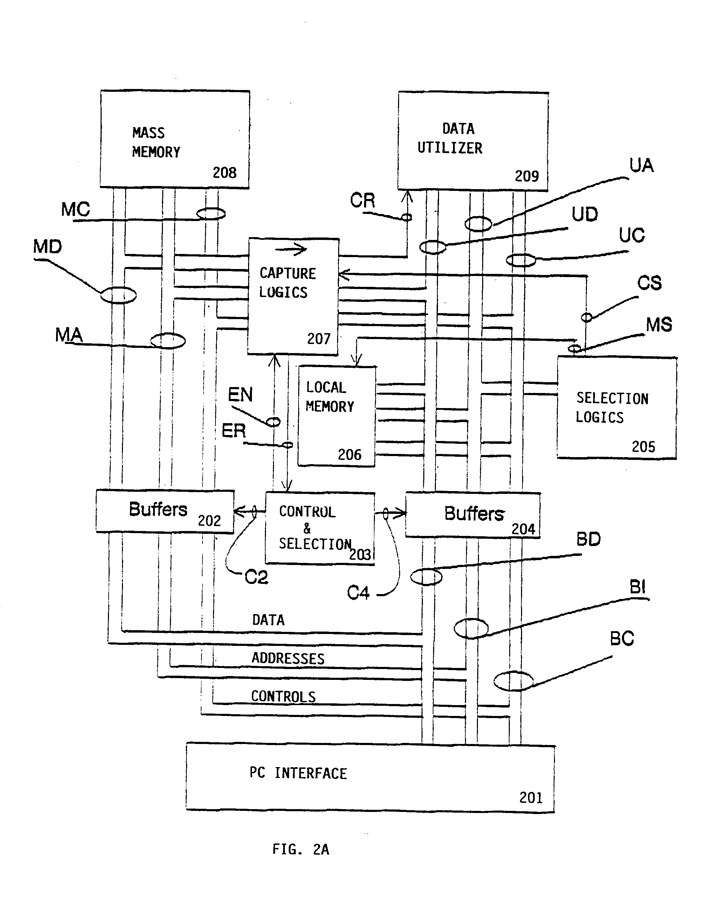

Let us refer to Figure 1: in this figure there is shown the architecture of the system according to the invention in a most general way. A data processing system such as a personal computer 1 must handle the transit of digitalized video signals between a generator/utilizer 2 of video sequences, possibly subjected to compression/de-compression towards a digital mass memory 3. In the simplified solution (according to Figure 2A) the generator/utilizer has to be intended as being only a utilizer.

In the general case to which the present invention is particularly suitable the bit or byte rate of the generator/utilizer 2 and of the mass memory 3 are different and however not correlated a priori each other. The transfer of data in a bidirectional sense between the block 2 and the block 3 is performed through a buffer memory 4 which provides for the compensation of the different timings of the groups 2 and 3.

The generator/utilizer of digital video sequence 2 may be an intelligent device (for instance a digital signal processor). In such a case the buffer memory 4 is no more strictly necessary, and it is a task of the device 2 to perform the management of the data exchange protocol with the mass memory 3. The management of such data exchange must be performed through a suitable interface, that adapts the control signals and the pertaining timings to the needs of the two devices. The use of the memory 4 may be avoided whenever the data transfer capabilities of the generator/utilizer 2 and of the mass memory 3 are compatible. On the contrary, the buffer memory 4 is still necessary.

The connection lines 5 between the several blocks 1, 2, 3 and 4 indicate, indifferently in this representation, data lines, video lines, control lines and so on, and are indicated for showing the interconnections that will be discussed into detail in the following.

Clearly, the Personal Computer 1 may be associated to peripherals, not shown, for interactivity operations in the transfer of data between the blocks 2 and 3 with information generated and/or memorized in the Personal Computer 1.

Now what is shown in Figure 1 will be discussed more into detail, with reference to the embodiment shown in Figure 2.

There are three devices that should be put in communication each other: the Personal Computer 100, the utilizer/generator of video sequences 101 associated to a source/destination 102, and the controller 103 of the digital mass memory 104.

The Personal Computer system 100, that as an example may be a personal computer of the kind IBM-AT, is provided with a address BUS 105 and data BUS 106, and a BUS 107 for control signals.

The device 101 is, for instance, a compressor/decompressor of digital video data, associated to a source/destination 102 of such signals such as for instance a TV camera or a monitor respectively, not shown, that provide and receive video data under a digitalized format as it is well-known to a person skilled in the art, through a dedicated BUS 101A.

The device 103 is a controller for a mass memory 104 such as a digital mass memory embodied as an hard disk that receives or provides data to the controller 103 through a dedicated BUS 103A.

The devices 101 and 103 communicate in a bidirectional way, as it will be shown hereinafter through a dedicated bus for digital video signals 110, 111, with the interposition of a buffer memory 112 the structure and purpose of which will be better shown hereinafter. The digital video bus 110, 111, are branched in 110A, 111A towards a distributor/selector 113 cooperating with the data Bus 106 of the Personal Computer system 100. A part of the bus 106 is connected with 106A to a register 114 of status and control the operation of which will be shown hereinafter.

It is assumed that the operation of the three devices 100, 101(102), 103(104) is entirely asynchronous, and for showing this there are enphasized the blocks X-clock 115 and Y-clock 116, which represent, respectively, the generators of the operating frequences of the devices 101 and 103. The operating frequency of the system 100 is not mentioned explicitly, but it is however completely asynchronous with respect to the clocks 115, 116.

Let us assume that each device be provided with specific data BUS. If the BUS of some device do not have the same width of the other, there should be interposed a BUS convertion circuit, that it is not disclosed into detail because within the grasp of any person expert in electronic design.

It is assumed that data transfers may occur between all the three devices 100, 101, and 103.

There are basically three kinds of communications.

The first kind of communication is effected between the system 100 and the controller 103. The system 100 can read data from the controller 103 and can send data to the controller 103. In this cases, the system 100 has the control of the communication, that is performed under control of a program, which is resident in the system 100.

The second kind of communication occurs between the system 100 and the device 101. The system 100 can read data from the device 101 and send data to the device 101. In these cases, the system 100 has the control of the communication, that is performed under control by software.

The data BUS 111, 111A and 110, 110A of the devices 101 and 103 and the data BUS 106A of the Status & Control Register 114 are seen by the system 100, on its own system data BUS 106, through the distributor/selector 113, the "on" and "off" of which is controlled by the control signals on the lines 116 produced by the Control BUS Controller 115 and by the selection signals CS-2, CS-3, CS-STA, produced by the Selection Controller 120. The Control BUS Controller 115 is also charged of the task of performing the handshaking of the System Control BUS 107.

The third kind of communication is performed between the device 101 and the controller 103. The exchange of data is performed in an automatic and asynchronous way with respect to the system 100, utilizing the protocol for the data exchange through DMA. The device 101 and the controller 103 exchange data each other, through the transit/compensation memory 112. In these cases the device 101 and the controller 103 do hold both the control of the communication with the memory 112, where the memory 112 is the memory and the FIFO controllers 117 and 118 operate as DMA towards 101 and 103. The exchange of data between the device 101 and the controller 103 is activated by the system 10, through an initialization procedure, which provides for the programming of the devices 101 and 103, and to enable the communication, by writing on the Status & Control Register 114, that produces the enable and direction signals (ENAB/DIR) on the line 119 towards the FIFO controllers 117 and 118. The data BUS 111, 110 of the device 101 and of the controller 103 are separated by the FIFO transit memory 112 that operates for decoupling the flow of data. The memory 112 is necessary because the devices 101 and 103 have, as above cited, a different timing, and the communication between these devices is performed automatically upon completion of initialization performed by the system 100. The presence of the FIFO memory 112 eliminates the need of a synchronization of the protocol of communication between asynchronous devices and minimizes the conditions of "overrun" and "underrun", that may result from the different timing and modalities of operation of the devices 101 and 103.

The addresses of the system address BUS 105 arrive in parallel to the device 101, to the controller 103, and to the Selection Controller 120.

The device 101 and the controller 103, when selected, will utilize preferably, the lower order addresses for the selection of the internal registers.

The Selection Controller block 120 implements the decoding of the addresses, that travel on the System Address BUS 105 and produces three selection signals: CS-2, CS-3, CS-STAT, respectively, ,on the lines 121, 122, 123. Let us assume that both the device 101 and the device 103 have an interface suitable for the architecture of the IBMAT systems or the compatible ones. This means that the devices 101, 103 are selected by means of a "Chip Select" signal, and that they do not require special addressing procedures. Moreover, the device 101 and/or 103 with an AT interface, after having received the "Chip Select", awaits that the STROBE signal on the line 124 and/or 126, relating to the operation being carried out, is set, starting the handshaking procedure specific for that operation, and managed by means of the Input/Output signals, that in Figure 2 are indicated with the label "TIMINGS", on the line 125 and/or 127.

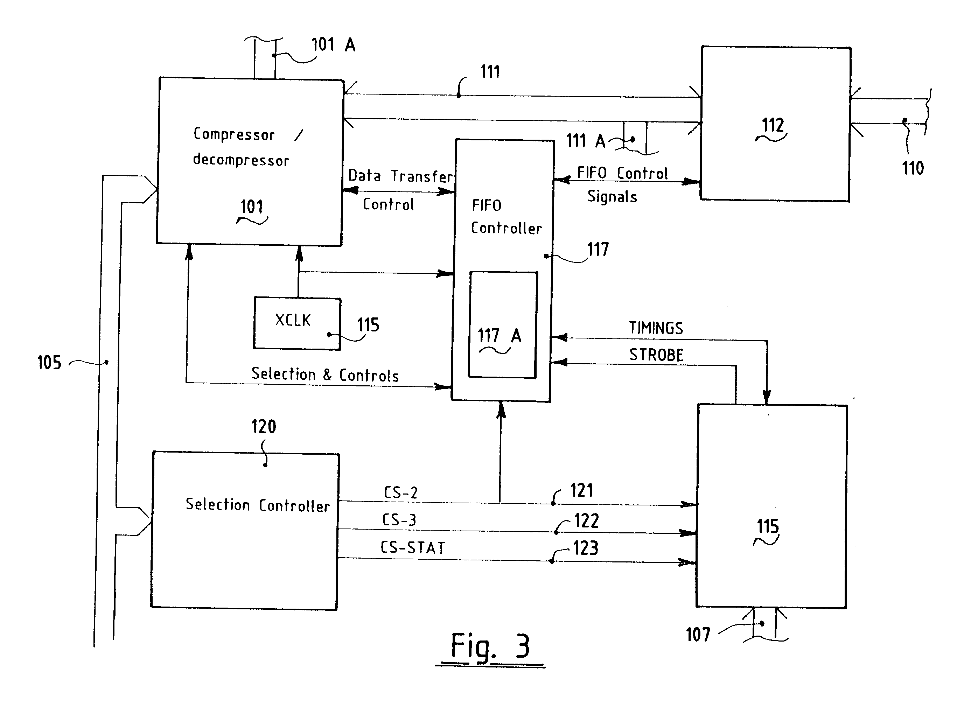

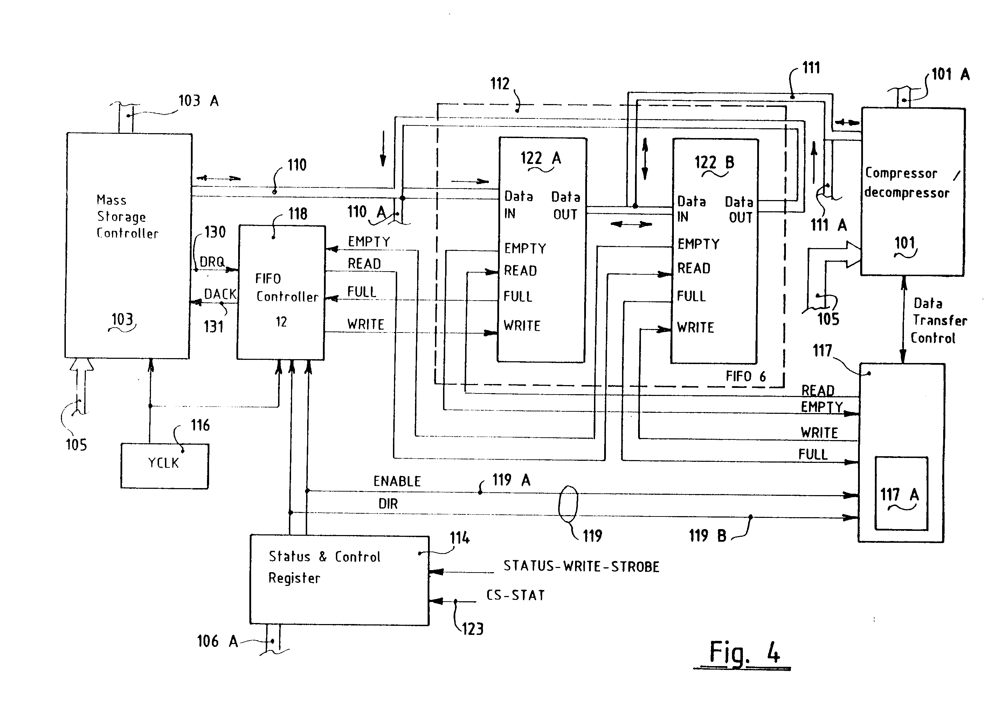

If the device 101 (and/or 103) is not provided with an AT interface, there should be provided a circuit, defined "Control Converter" (117A in figures 3 and 4), that implements addressing procedure, i.e. having as an Input the Chip Select signal CS-2, present on the line 121 provides for the the selection of associated device 101, according to modalities specific for that device, and moreover implements the translation of the STROBE and TIMING signals into the signals that are specific of the interface of the device 101. If the device 101 is not provided with an AT interface, also the signals for the management of the data transfer in an automatic way are different from those provided for in the AT architecture. It derives that from the fact that the connection between the FIFO Controller 117 and the device 101 can not be a direct one, as in the case of a device 101 provided with an AT interface, but should be controlled by the "Control Converter" 117A. It will be therefore convenient, in this case, to define a single function block, identified as FIFO Controller + Control Converter, the logic connections of which with the remaining of the circuit are disclosed with reference to Figure 3. In the exemplary application hereinafter disclosed, the device 103 is provided with an AT interface, while the device 101 is provided with an interface different from the AT interface.

A signal CS-2 on the line 121 is the Chip Select signal for the device 101, the signal CS-3 on the line 122 is the Chip Select signal for the device 103. The signal CS-STAT on the line 123 is the Chip Select for the Status & Control Register 114. The signals CS-2, CS-3, CS-STAT are Inputs, besides than for the corresponding devices above identified, also for the Control BUS Controller 115 and for the distributor/selector 113. The Control BUS Controller 115 in correspondence with the Chip Select, recognizes the operation specified by the signals of the System Control BUS and provides to produce both the signals STROBE and TIMINGS for the devices 101 and 103, or STATUS-WRITE-STROBE for the Status & Control Register 114.

The Status & Control Register 114 is a static device. When the System 100 wants to read the register, on the System Address BUS 105 there are present the addresses of the register, the Selection Controller 120 produces the CS-STAT signal on the line 123 and the Status & Control Register 114 places on its own Data BUS 106A the data memorized in the register, that are subsequently transferred from the distributor/selector 113 on the System Data BUS 106.

Figure 2A represents the function blocks involved in the implementation of the "Simplified Embodiment". In this case the data utilizer 209 does not have to send information to the mass memory 208 and therefore the connection between the data BUS of the mass memory MD and the connection between the utilizer UD is performed through the function block 207 that is a uni-directional one (from 208 towards 209 as it is shown by the arrow) defined as "Capture Logic". Discussing more in detail figure 2A we have:
The BUS AT, identified as "PC Interface 201", colloquiates with the board through the three BUS of data BD, of addresses BI and of the controls BC. The "control and selection" module handles the management of the flow of data between the internal buses MD and UD and the system bus BD operating suitably on the enabling and the direction of the buffers indicated in 202 and 204 by means of the control lines C2 and C4; this block is also capable of enabling the "Capture Logic" 207 by means of the signals indicated with EN and to perform the arbitration about the access to the "Local Memory" 206 that is shared between the system CPU and the "data utilizer" 209. For simplicity of representation in figure 2A there have not been reproduced the connections between the module 203 for "Control and Selection" and the other operating blocks.

Through the block of the buffers 202, the data, addresses and control bus of the Personal Computer are connected to the internal management bus of the "Mass Memory": data bus MD, address bus MA and control bus MC. By means of these connections, the CPU of the Personal Computer is capable of managing in a complete and bi-directional way, the accesses to the mass memory. The module 208 (mass memory), in this case operates as a slave and consequently will drive the data bus MD and part of the controls MC (interrupt lines or DMA requests) only upon request by the CPU or after having being enabled by this latter while the address bus MA and a large part of the control signals (reading and writing strobes) will be managed exclusively by the Personal Computer interface 201.

The module of the buffers 204 allows the connection between the external buses (BD, BI and BC) and the local buses of the block 209. Since the data utilizer is an intelligent device, that is asynchronous with respect to the system CPU, the colloquiation between the Personal Computer Interface 201, and the data utilizer 209 is subject to arbitration in order to avoid conflicts during the access to the shared resources (local Memory 206 and dedicated registers internal to the block 209). As above said, the arbitration is performed in the "Control and Selection" module 203 and since this technique is well known and does not make part of the present invention, will not disclosed further. The data BUS UD, the address BUS UA and the Control BUS UC are generally managed by the data utilizer 209 for having access, through the "Selection Logic 205" and the memory select signals (MS) or Capture Select (CS), to the "Local Memory" 206 and to the "Capture Logic" 207.

The exchange of commands and data between the interface PC (201) and the data Utilizer 209 is performed through the "Local Memory" 206 that can be accessed by the CPU of the Personal Computer 201 when the buses UD, UA and UC are managed by the buffers 204.

The automatic transfer function is performed at the inferior of the block 207 (capture Logic). This block allows the uni-directional passage of the data captured on the bus MD of the mass memory 208 towards the bus UD upon request by the data utilizer 209.

In the "simplified" embodiment approach, the transfer of data makes use of the interface circuits of the Personal Computer 201 for the management of the signals towards the mass memory 208 but does not required by the CPU of the Personal Computer storage operations of the data received from the mass memory: as a matter of fact they are automatically detected and captured by the logics of the block 207, previously enabled by the control and selection module 203. The "capture logics" performs moreover the task of converting the format of the bus (8 bit for the bus PD and 32 bits for the bus UD) and of signalling to the utilizer 209 the presence of valid data through the request line CR (tipically an interrupt). The transfer cycle requires the following steps:
(A) The CPU of the Personal Computer signals to the data utilizer 209 the start of a transfer cycle (for instance by writing the command on the "Local Memory" 206). The utilizer is prepared for the reception (for instance enabling the reception of the interrupt connected to the CR signal).
(B) The CPU informs the mass Memory 208 that the same must render available a block of data and enables the capture Logics 207 by operating on the "Control and Selection Module".
(C) As soon as the data are available, the CPU performs a "dummy read" from the mass memory; this means that the data are rendered avaialable on the bus MD but they are not transferred over the bus BD.
(D) The capture Logic acknowledges the access to the data register of the mass memory and captures in a latch the data present on the bus MD subsequently activates the line CR for informing the utilizer 209 of the presence of data.
(E) The utilizer 209 replies to the request performing a read out of the cpatured data. For performing this operation it utilizes the Selection Logics 205 that produces the CS signal for identifying the module that is the destination of the operation.
(F) A cycling is performed on the steps (C),(D),(E) up to the completion of the transfer of the block of data.
(G) At the end of the transfer, the CPU generates suitable commands towards the mass memory 208, the utilizer 209 and the Control and Selection block 203 for signalling the end of the direct transfer step.

During the above sequence of operations, the capture module 207 performs also the following functions:
Conversion of the bus dimensions: the bus PD of the mass Memory may have a size different from the one of the bus UD of the utilizer (for instance SCSI controller NCR 53C400 has a 8 bit bus, the DSP AT&T DSP3210 has a 32 bit bus). In this case the capture module will contain, besides the necessary control logics, four 8 bit latches and a counter. The signal CR (a request of service to the Utilizer 209) will be generated only when four bytes have been captured. This philosophy can be easily adapted to any combination of buses at 8, 16 or, as in this case, 32 bits.
Overflow Control: The capture logic 207 compares the status of the latches (full/empty) before performing a new reading from the bus MD. If the latches are still full (CR is active but the utilizer 209 does not have read up to now the data contained in the latches) at the moment of the transfer of new data, an interrupt is generated for an error condition towards the CPU of the Personal Computer (the signal ER that goes from the capture block 207 to the control module 203). It will be consequently a task of the protocol operating on the CPU of the Personal Computer to interrumpt and resume the transfer.

As a non limiting example, a possible implementation of the main function blocks of the device according to the invention will be now described. Let us refer to Figure 4.

As it has been said beforehand, the buses of the video digital signals 110, 110A, 111, 111A, are interconnected by means of a buffer memory indicated as a whole in 112. In its simplest embodiment, referred to only as a non limiting example, the memory 112 is realized by means of two banks of FIFO memories 122A, 122B constitued by pairs of FIFO memory chips of the type CY7C425 produced by Cypress Semiconductor, USA. The interconnection between the several control terminals of the banks FIFO 122A and 122B with the controllers 118 and 117 will not be disclosed into detail because on the basis of the manufacturer specifications of these components a designer can easily design the "glue electronics" for their use. Clearly each of the units 122A, 122B may be constituted of a plurality of the above indicated chips connected in cascade in order to obtain the desired capacity for the memory 122.

To the controller 103, that is assumed to be provided with an AT interface, the FIFO controller 118 is associated, an dboth are timed with YCLK 116. To the device 101, that we assume provided with an interface different from the AT interface, there is associated the FIFO Controller + Control Converter 117, 117A, and both are timed with the clock XCLK 105.

In the AT architecture, the data exchange protocol through DMA is of the master/slave kind. Two signals are active: DRQ and DACK that are present on the lines 130, 131. The master of the communication, in this case the controller 103, sets DRQ. The DMA, in our case the FIFO Controller 118, when the same is ready, replies with a DACK on the line 131 and produces the control and address signals towards the transit and compensation on memory indicated as a whole in 112. Since in our cases the memory 112 is constituted of a assembly of FIFO, the addresses are not necessary, and the control signals are EMPTY and READ when the device 103 receives data, and FULL and WRITE, when the device 103 transmits data. The direction of the data transfer is determined by the initialization performed by the system 100. The initialization performs three functions:
i) The controller 103 is programmed for performing a read (or write) operation of a given block of data having dimension "n".
ii) The device 101 is programmed for performing a write (or read) operation in a block of data having dimension "n".
iii) In the Status & Control Register 114 there is set an enable bit, to which the signal ENAB is associated on the line 119A, and there is set, in a way congruent with the programming of the controller 103 and the device 101, the direction bit, to which the signal DIR on the line 199B is associated.

The signals ENAB and DIR communicates to the FIFO controller 118 that the same is enabled to produce signal DACK and communicates to the FIFO Controller + Control Converter 117(177A) that the same is enabled to begin the protocol for data transfer towards the device 101. Such protocol for data transfer is specific of each device, that is not provided with an AT interface, and the discussion of these specific case is outside the scope of the present discussion.

As a non limiting example, the mass memory 104 is of the kind --Hard Disk Micropolis 1589-15---with SCSI interface. The controller 103 for the SCSI interface is of the kind ---NCR53C96--.

The block 101 may be a --JPEG IMAGE COMPRESSION PROCESSOR C-CUBE CL500--.

The characteristics of these units guarantee satisfactory performances for the system according to the invention.

Changes and/or modifications could be made to the present invention without departing from the scope of the invention itself.

## Claims

1. A system for the management of the memorization and restitution of sequences of video signals on digital mass memories, characterized in that it comprises:
a computer (100) provided with a System Address Bus (105), a System Data Bus (106) and a System Control Bus (107);
a source/destination of video signals (102) associated to a compressor/de-compressor (101) of video images;
a digital mass memory (104) associated to a relative controller (103);
a first clock signal (115) and associated to said compressor/de-compressor (101) and a second clock generator (116) associated to said controller (106), said clock generators (115, 116) being independent each other and in a not synchronized relationship each other;
buffer memory means (112) interconnecting operatively said compressor/de-compressor (101) and said controller (103); said buffer memory means (112) being associated to a controller (117, 118) respectively connected to said clock generators (115, 116);
connection means for said compressor/de-compressor (101) and said controller (103) and said buffer memory means (112) arranged so that said computer (100) can manage the transfer of video data between said compressor/decompressor (101) and said controller (103) without engaging the mass memory of said computer (100) while maintaining the possibility of intervention on the signals in transit in said buffer memory (112).

2. A system according to claim 1, characterized in that said compressor/de-compressor ( 101 ) and said controller (103) are respectively connected with said buffer memory (112) by means of respective buses for video data (111, 110) respectively associated to auxiliary buses for video data (111A, 110A) on a distributor/selector (113) associated to a data bus (106) of said computer (100).

3. A system according to claim 2, characterized in that said buffer memory (112) is constituted of a first and of a second plurality of FIFO memories (122A, 122B), said buffer memory (112) being associated to management units (controller) (118, 117) respectively located on the side of said controller (103) and said compressor/de-compressor (101).

4. A system according to claim 3, characterized in that said management units (118, 117) are respectively controlled by said clock generators (116, 115).

5. A system for the management of the memorization and restitution of sequences of video signals from a digital mass memory towards a data utilizer, characterized in that it comprises:
a computer having an interface (201) whereon are available buses for data (BD), addresses (BI) and controls (BC), arranged for controlling a capture logics (207) arranged between a mass memory (208 constituting the source of video sequences and a data utilizer (209);
control and selection means (203) arranged for controlling buffers (202,204) interposed between said computer interface (201) and said mass memory (208) and said data utilizer (209);
a local memory (206) arranged for being shared between a CPU driving said interface (201) and said data utilizer (209) under the control of a selection logics module (205) and in connection with a capture logics module (207, for controlling the flow of data from said mass memory (208) and from said interface (201) towards said data utilizer (209).
